# EUROPEAN PATENT APPLICATION

(11) **EP 2 985 114 A2**
(43) Date of publication of application: **17.02.2016**
(21) Application number: 15179664.6
(22) Date of filing: 04.08.2015
(51) Int. Cl.: B23Q 7/04, B25J 15/00

(54) **WORKPIECE CONVEYING DEVICE AND MACHINE TOOL**

(30) Priority: 08.08.2014 JP 2014162266
(71) Applicant: Murata Machinery, Ltd., Minami-ku Kyoto-shi Kyoto 601-8326 (JP)
(72) Inventor: Nakajima, Akio, Inuyama-shi, Aichi 484-8502 (JP)
(74) Representative: Zimmermann, Tankred Klaus

(57) **Abstract**

Provided are a workpiece conveying device (100) and a machine tool that can reduce time required to convey a workpiece. The workpiece conveying device (100) includes an elevating section (29) that includes a chuck (12, 13) for holding the workpiece, a slider (26) that supports the elevating section (29) such that the elevating section (29) is movable in a first direction (D1), the slider (26) being movable in a second direction (D2) different from the first direction (D1), and a driving section (30) that drives the elevating section (29), wherein the driving section (30) includes a driving source (30a) disposed away from the elevating section (29) and the slider (26), and a transmitting section (30b) that transmits a driving force of the driving source (30a) to the elevating section (29).

## Description

### BACKGROUND OF THE INVENTION

### 1. Field of the Invention

The present invention relates to a workpiece conveying device and a machine tool.

### 2. Description of the Related Art

A lathe that is one of machine tools may include a workpiece conveying device for conveying a workpiece between a spindle that holds the workpiece to be processed and a workpiece loading/unloading section. Such a known workpiece conveying device includes a chuck that holds a workpiece and a moving mechanism that moves the chuck (Refer to Japanese Unexamined Patent Publication No. 2004-216504 for example). The moving mechanism includes an elevating section that supports the chuck and rises and falls, and a slider that supports the elevating section and horizontally slides, and further, the slider is provided with a driving source that drives the elevating section.

However, since the above-mentioned configuration, in which the driving source is provided in the slider, receives the mass of the driving source in addition to the mass of the slider, rapid acceleration and deceleration of the slider are prevented. This prevents reduction of travelling time of the slider, and prevents reduction of time required to convey the workpiece.

### BRIEF SUMMARY OF THE INVENTION

In consideration of such circumstances, an object of the present invention is to provide a workpiece conveying device and a machine tool that can reduce time required to convey the workpiece.

A workpiece conveying device according to the present invention includes: a first movable body including a chuck that holds a workpiece; a second movable body that supports the first movable body such that the first movable body is movable in a first direction, the second movable body being movable in a second direction different from the first direction; and a first driving section that drives the first movable body, wherein the first driving section includes a driving source disposed away from the first movable body and the second movable body, and a transmitting section that transmits a driving force of the driving source to the first movable body.

The transmitting section may expand and contract in the second direction, and may be formed to transmit rotation. The transmitting section may include a bar-like spline shaft that extends in the second direction and a tube-like spline bearing that receives the spline shaft, and the spline shaft and the spline bearing may move relative to each other in the second direction. The spline shaft may be connected to the driving source to rotate about an axis along the second direction, and the spline bearing may be rotated by rotation of the spline shaft to apply a driving force to the first movable body. The workpiece conveying device may further include a third movable body that supports the second movable body such that the second movable body is movable in the second direction, the third movable body being movable in a third direction different from the first direction and the second direction, wherein the driving source may be disposed in the third movable body. The third movable body may be guided by a guide to move in the third direction, and the driving source may be disposed, on the third movable body, at a position above the guide, or a position shifted opposite to the second movable body from the position above the guide along the second direction. The third movable body may include a second driving section that drives the second movable body, and the second driving section may be disposed in the third movable body on a side where the second movable body is installed with respect to the guide.

A machine tool according to the present invention includes a workpiece conveying device that that load or unload a workpiece to or from a spindle, the workpiece conveying device being the above-mentioned workpiece conveying device.

According to the present invention, the driving source of the first driving section is disposed away from the first movable body and the second movable body. Thus, as compared to the configuration in which the driving source is provided in the second movable body, weight of the second movable body can be reduced. Therefore, the second movable body can be rapidly accelerated and decelerated during movement in the second direction, and the travelling time of the second movable body in the second direction can be reduced. As a result, time required to convey the workpiece can be reduced.

In the workpiece conveying device in which the transmitting section expands and contracts in the second direction, and is formed to transmit rotation, the driving force of the driving source can be reliably transmitted to the first movable body while allowing movement of the second movable body in the second direction. In the workpiece conveying device in which the transmitting section includes the bar-like spline shaft that extends in the second direction and the tube-like spline bearing that receives the spline shaft, and the spline shaft and the spline bearing are movable relative to each other in the second direction, even the high-torque driving force of the driving source can be reliably transmitted to the first movable body. In the workpiece conveying device in which the spline shaft is connected to the driving source to rotate about the axis along the second direction, and the spline bearing is rotated by rotation of the spline shaft to apply the driving force to the first movable body, the spline bearing that can be reduced in weight is connected to the first movable body, enabling further reduction of the weight of the second movable body. In the workpiece conveying device which further includes the third movable body that supports the second movable body such that the second movable body is movable in the second direction, the third movable body being movable in the third direction different from the first direction and the second direction, and the driving source is disposed on the third movable body, in the configuration in which the chuck is movable in the first direction, the second direction, and the third direction, the second movable body can be rapidly accelerated and decelerated during movement in the second direction. In the workpiece conveying device in which the third movable body is guided by the guide to move in the third direction, and the driving source is disposed, on the third movable body, at the position above the guide, or the position shifted opposite to the second movable body from the position above the guide along the second direction, a moment added to the driving source is reduced when the driving source is disposed at the position above the guide. When the driving source is disposed at the position shifted opposite to the second movable body from the position above the guide along the second direction, the weight of the third movable body can be brought into balance in the second direction. In the workpiece conveying device in which the third movable body includes the second driving section that drives the second movable body, and the second driving section is disposed in the third movable body on the side where the second movable body is installed with respect to the guide, the weight of the third movable body can be brought into balance in the second direction because the driving source and the second driving source are disposed across the guide in the second direction.

The machine tool according to the present invention uses the workpiece conveying device that can rapidly accelerate and decelerate the second movable body during movement in the second direction, and that can reduce time required to convey the workpiece. Thus, cycle time of the machine tool can be reduced.

### BRIEF DESCRIPTION OF THE DRAWINGS

FIG. 1 is a perspective view illustrating an example of a workpiece conveying device according to a first embodiment;
FIG. 2 is a side sectional view illustrating an example of the workpiece conveying device according to the first embodiment;
FIG. 3 is a plan view illustrating an example of the workpiece conveying device according to the first embodiment;
FIGS. 4A and 4B are views illustrating an example of a transmitting section of the workpiece conveying device, where FIG. 4A is a perspective view and FIG. 4B is a sectional view;
FIGS. 5A and 5B are side views schematically illustrating an example of a moving mechanism;
FIG. 6 is a side view illustrating an example of operation of the workpiece conveying device;
FIG. 7 is a side view illustrating an example of the operation of the workpiece conveying device; and
FIGS. 8A and 8B are views illustrating an example of a machine tool according to a second embodiment.

### DETAILED DESCRIPTION OF PREFERRED EMBODIMENTS

Embodiments of the present invention will be described below with reference to the drawings. However, the present invention is not limited thereto. In the drawings, for convenience of description of the embodiments, components are scaled as appropriate, for example, by partial enlargement or exaggeration. In each of the following figures, directions in the figure are described using an XYZ coordinate system. In the XYZ coordinate system, a plane parallel to the horizontal plane is defined as an XZ plane. A direction parallel to the XZ plane is defined as a Z direction, and a direction orthogonal to the Z direction is defined as an X direction. The direction vertical to the XZ plane is defined as a Y direction. In each of the X direction, the Y direction, and the Z direction, the direction indicated by an arrow in the figure is a + direction, and the opposite direction is a - direction.

### <First embodiment>

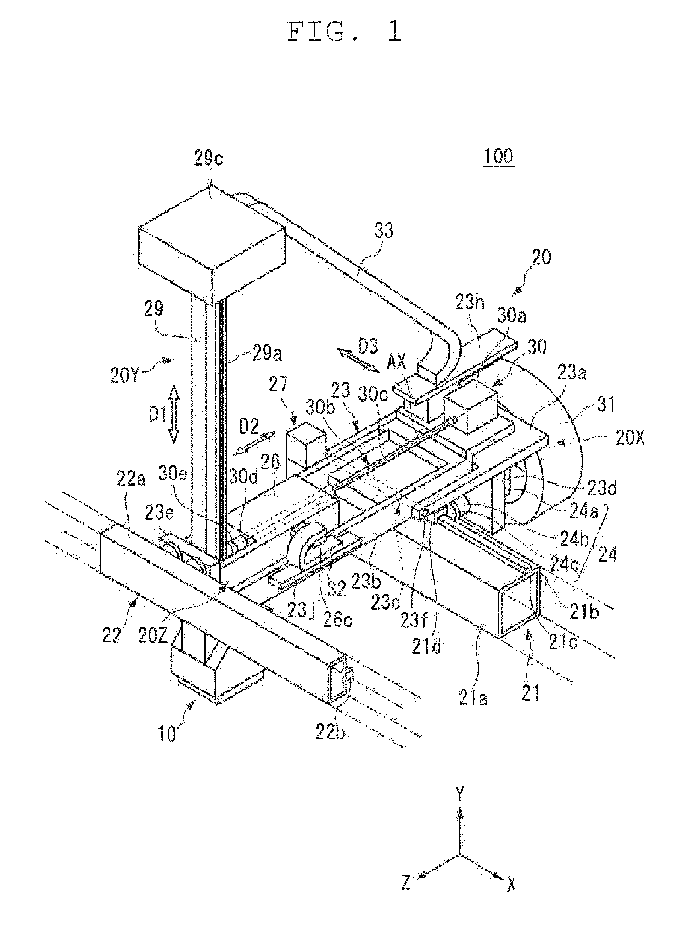

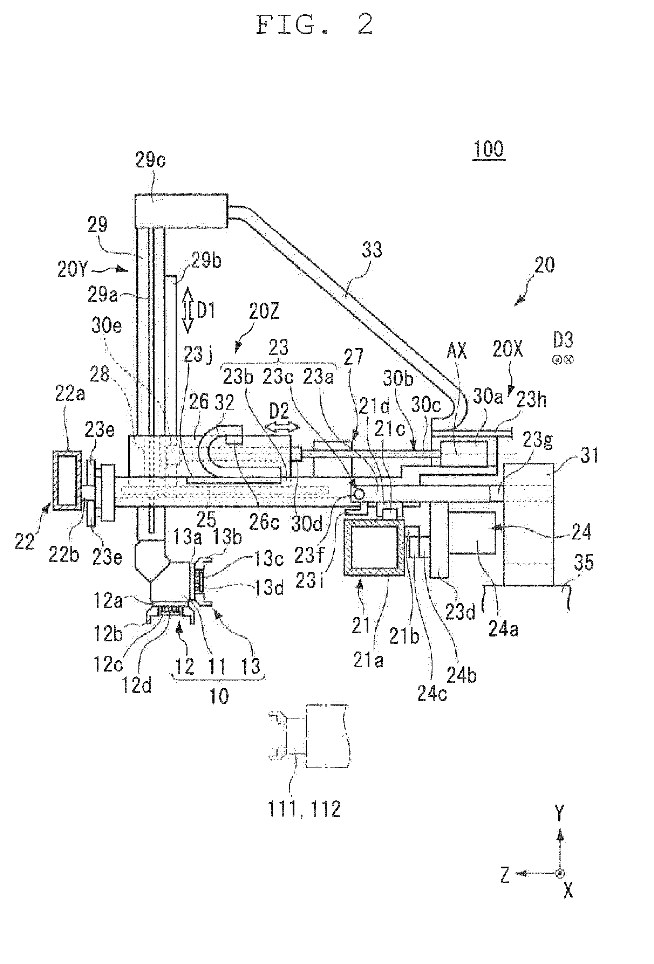

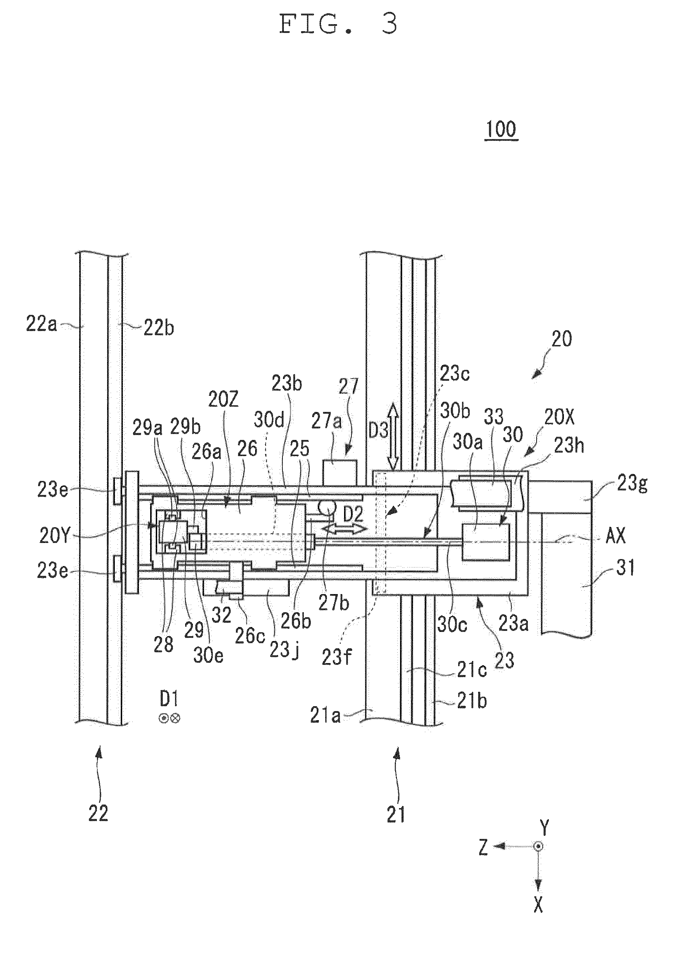

FIG. 1 is a perspective view illustrating an example of a workpiece conveying device 100 according to a first embodiment. FIG. 2 is a side view illustrating an example of the workpiece conveying device 100. FIG. 3 is a plan view illustrating an example of the workpiece conveying device 100. However, to clarify the configuration of the workpiece conveying device 100, in FIGS. 1 to 3, a part of the workpiece conveying device 100 is illustrated in cross section or omitted.

As illustrated in FIGS. 1 to 3, the workpiece conveying device 100 includes a workpiece holding section 10 and a moving mechanism 20. The workpiece conveying device 100 is mounted on a below-mentioned machine tool for use, and conveys a workpiece W between spindles 111, 112 (indicated by alternate long and short dash lines in FIG. 2) provided in the machine tool and a workpiece loading/unloading section (not illustrated).

As illustrated in FIG. 2, the workpiece holding section 10 includes a loader head 11. The loader head 11 includes chucks 12, 13 that grip the workpiece W. One of the chucks 12, 13 is disposed so as to face the spindle 111 (oriented in the -Z direction), and the other is disposed so as to face the floor face (oriented in the -Y direction).

The loader head 11 is provided with a rotating mechanism (not illustrated) that exchanges the positions of the two chucks 12, 13. The rotating mechanism is rotatable about an axis inclined relative to the Y axis by a predetermined angle (e.g., 45 degrees). The rotating mechanism can exchange the positions of the two chucks 12, 13. As illustrated in FIG. 2, the chucks 12, 13 include base members 12a, 13a, chuck jaws 12b, 13b, pusher plates 12c, 13c, and elastic members 12d, 13d, respectively.

The base members 12a, 13a support the chuck jaws 12b, 13b and the elastic members 12d, 13d, respectively. The plurality of chuck jaws 12b, 13b are arranged at predetermined intervals on the peripheries of the chucks 12, 13, respectively. The chuck jaws 12b, 13b can be moved in the radial direction of the chucks 12, 13 to hold the workpiece W. A driving source for moving the chuck jaws 12b, 13b is provided, for example, in the loader head 11.

The pusher plates 12c, 13c press an end face of the workpiece W. The pusher plates 12c, 13c are formed in a triple arm shape so as not to interfere with the chuck jaws 12b, 13b, respectively. The pusher plates 12c, 13c are supported by the elastic members 12d, 13d, respectively. When the gripping of the chuck jaws 12b, 13b is released, the elastic members 12d, 13d can push out the workpiece W via the pusher plates 12c, 13c.

The moving mechanism 20 moves the workpiece holding section 10. The moving mechanism 20 includes an X moving mechanism 20X, a Z moving mechanism 20Z, and a Y moving mechanism 20Y.

The X moving mechanism 20X includes a first guide (guide) 21, a second guide 22, a movable body (third movable body) 23, and a driving section 24.

The first guide 21 and the second guide 22 guides the movable body 23. The first guide 21 and the second guide 22 are formed longitudinally in the X direction, and are disposed spaced apart from each other in the Z direction. The first guide 21 and the second guide 22 are substantially parallel to each other in the X direction.

The first guide 21 includes a frame 21a, a rack 21b, a rail 21c, and a block 21d. The first guide 21 has a higher strength than the second guide 22, to be described below.

The frame 21a extends in the X direction, and is fixed to a fixing section (not illustrated). The frame 21a is formed hollow, for example, but may be formed solid. The frame 21a is formed rectangular when viewed in the X direction, for example, but the present invention is not limited thereto, and the frame 21a may have any other shape such as circle and triangle.

The rack 21b is disposed on a -Z side face of the frame 21a, and is formed linearly in the X direction. On a -Y side face of the rack 21b, a plurality of teeth are formed. The plurality of teeth are arranged at predetermined pitches in the X direction.

The rail 21c and the block 21d constitute, for example, a linear guide. The rail 21c is disposed on an upper face (+Y side face) of the frame 21a, and is formed linearly in the X direction. The block 21d is attached to an upper portion of the rail 21c, and is movable along the rail 21c in the X direction.

The second guide 22 includes a frame 22a and a protruding piece 22b. Similarly to the frame 21a of the first guide 21, the frame 22a is formed hollow, for example, but may be formed solid. The frame 22a is formed rectangular when viewed in the X direction, for example, but the present invention is not limited thereto, and the frame 22a may have any other shape such as circle and triangle.

The frame 22a is disposed above (+Y side position) the frame 21a of the first guide 21. The frame 22a is provided with the protruding piece 22b. The protruding piece 22b is disposed on the -Z side face of the frame 22a, and is formed on substantially the entire -Z side face in the X direction. The protruding piece 22b protrudes toward the first guide 21 in the -Z direction.

The movable body 23 is provided so as to extend between the first guide 21 and the second guide 22. The movable body 23 is movable along the first guide 21 and the second guide 22 in a third direction D3 parallel to the X direction. The movable body 23 includes a first structure 23a, a second structure 23b, and a joint 23c.

The first structure 23a is connected to an upper face of the block 21d of the first guide 21. Accordingly, the block 21d moves along the rail 21c so that the first structure 23a can move in the X direction integrally with the block 21d. In this manner, the first structure 23a is guided by the first guide 21.

The +Z side end of the first structure 23a is coupled to the second structure 23b via the joint 23c. The first structure 23a includes a driving-section support section 23d protruding in the -Y direction. The driving-section support section 23d is formed integrally with the first structure 23a, and supports the driving section 24, to be described later.

The second structure 23b has a bottom disposed along the XZ plane and walls disposed along the +X side and the -X side. Rollers 23e are provided at a +Z side end of the second structure 23b. The pair of rollers 23e are provided so as to sandwich the protruding piece 22b therebetween in the Y direction. A below-mentioned elevating section 29 rises and falls in the Y direction. With the pair of rollers 23e sandwiching the protruding piece 22b in the Y direction, loads caused by movement of the elevating section 29 can be supported in both of the +Y direction and the -Y direction. The rollers 23e are provided so as to roll on the respective upper and lower faces of the protruding piece 22b in the X direction. In this manner, the second structure 23b is guided to the second guide 22 via the rollers 23e. The protruding piece 22b is not limited to a plate-like shape, and may be cylindrical, for example. In the case of the cylindrical protruding piece 22b, a roller having a concave face is brought into contact with the protruding piece 22b. The roller may be disposed on the frame 22a.

The joint 23c is tubular, or has a tubular coupling member 23f. The coupling member 23f is disposed parallel to the X direction. The central shaft of the coupling member 23f is disposed parallel to the X direction. The coupling member 23f connects the first structure 23a and the second structure 23b such that the structures can swing about the axis of the central shaft. Accordingly, the central shaft of the coupling member 23f serves as a swing shaft about which the first structure 23a and the second structure 23b swing.

The swing shaft is set parallel to the X direction. In the joint 23c, one of the first structure 23a and the second structure 23b can swing about the axis of the swing shaft with respect to the other of the first structure 23a and the second structure 23b. In this embodiment, as described below, the first structure 23a is supported by the +Y side face and the -Z side face of the frame 21a and thus, is restricted from rotating about the axis parallel to the X direction (axis of the swing shaft). The second structure 23b is disposed such that it can swing about the axis of the swing shaft. In this case, the swing shaft is disposed such that a distance to the first guide 21 is smaller than a distance to the second guide 22. With this configuration, when the +Z side end of the second structure 23b is displaced in the Y direction, a change of a swing angle is suppressed, thereby enabling stable movement of the movable body 23. As illustrated in FIG. 2, the -Y side face of the first structure 23a is provided with a stopper 23i. The stopper 23i restricts the rotation by locking the second structure 23b such that the second structure 23b does not rotate by a predetermined angle or more, for example, at the time of assembly.

The driving section 24 includes a driving source 24a, a transmission mechanism 24b, and a pinion 24c. The driving source 24a is supported by the driving-section support section 23d of the first structure 23a. Examples of the driving source 24a include a motor device. The driving source 24a rotates an output shaft (not illustrated) about the Z axis. The transmission mechanism 24b is coupled to the above-mentioned output shaft, and transmits rotation caused in the driving source 24a to the pinion 24c. The pinion 24c can rotate about the Z axis, and has a plurality of teeth arranged in a peripheral direction. The teeth of the pinion 24c are arranged to engage with the teeth of the rack 21b. The rotational force generated in the driving source 24a is transmitted to the pinion 24c via the transmission mechanism 24b to rotate the pinion 24c. Because the rack 21b (frame 21a) side is fixed, the pinion 24c moves in the X direction with respect to the rack 21b integrally with the driving-section support section 23d and the first structure 23a. The first structure 23a is connected to the block 21d on the +Y side of the frame 21a and to the rack 21b on the -Z side of the frame 21a, thereby being restricted from rotating about the axis parallel to the X direction.

The Z moving mechanism 20Z includes guide sections 25, a slider (second movable body) 26, and a driving section (second driving section) 27. The guide sections 25 are provided on the +X side wall and the -X side wall of the second structure 23b. The guide sections 25 each extend in the Z direction. The guide sections 25 guide the slider 26. The slider 26 is formed in a rectangular parallelepiped shape. The slider 26 is movable along the guide sections 25 in a second direction D2 parallel to the Z direction. The slider 26 has a through hole 26a penetrating a below-mentioned elevating section 29. The slider 26 is provided with a rack 26b. The rack 26b is formed linearly in the Z direction, and has a plurality of teeth on its -X side face. The plurality of teeth are arranged in the Z direction.

The driving section 27 includes a driving source 27a and a pinion 27b. The driving source 27a is disposed on the movable body 23 on the side where the slider 26 is installed relative to the first guide 21 (+Z side). Specifically, the driving source 27a is supported by the -X side wall of the second structure 23b. Examples of the driving source 27a include a motor device. The driving source 27a transmits the rotational force about the Y axis to the pinion 27b via a transmission mechanism (not illustrated). The pinion 27b is attached to the second structure 23b so as to be rotatable about the Y axis. The pinion 27b has a plurality of teeth arranged in the peripheral direction. The teeth of the pinion 27b are arranged to engage with the teeth of the rack 26b. The rotational force generated in the driving source 27a is transmitted to the pinion 27b via a transmission mechanism (not illustrated) to rotate the pinion 27b. Since the pinion 27b is attached to the second structure 23b, due to the rotation of the pinion 27b, the rack 26b is driven in the Z direction with respect to the pinion 27b. Thereby, the slider 26 moves along the guide sections 25 in the second direction D2 (Z direction).

The Y moving mechanism 20Y includes guide sections 28, the elevating section (first movable body) 29, and a driving section (first driving section) 30. The guide sections 28 guide the elevating section 29. The guide sections 28 are formed on the +X side inner wall and the -X side inner wall of the through hole 26a. The guide sections 28 each extend parallel to the Y direction. The guide sections 28 have grooves formed linearly in the Y direction.

The elevating section 29 is formed in a bar shape. The elevating section 29 is movable along the guide sections 28 in a first direction D1 parallel to the Y direction. Protruding pieces 29a are provided on the +X side face and the -X side face of the elevating section 29. The protruding pieces 29a are formed linearly in the Y direction. The protruding pieces 29a are inserted into the respective grooves of the guide sections 28. Accordingly, the elevating section 29 is guided by the guide sections 28 in the first direction D1 (Y direction) with the protruding pieces 29a inserted into the grooves of the guide sections 28. The elevating section 29 is provided with a rack 29b. The rack 29b is formed linearly in the Y direction, and has a plurality of teeth on its +X side face. The plurality of teeth are arranged in the Y direction. The workpiece holding section 10 is fixed to the -Y side end of the elevating section 29.

The driving section 30 includes a driving source 30a and a transmitting section 30b. The driving source 30a has a motor and a reduction gear which are not illustrated. The driving source 30a is supported by the upper face (+Y side face) of the first structure 23a. The driving source 30a is disposed at a position shifted opposite to the slider 26 (-Z side) from the position above the first guide 21 (+Y side) along the second direction D2 (Z direction). The driving source 30a is supported by the first structure 23a rather than the slider 26, which enables reduction of the weight of the slider 26. The driving source 30a may be disposed at a position above the first guide 21 (position on +Y side).

The transmitting section 30b transmits the driving force of the driving source 30a to the elevating section 29. The transmitting section 30b includes a spline shaft 30c, a spline bearing 30d, and a pinion 30e.

The spline shaft 30c is made of a metal material such as iron. A -Z side end of the spline shaft 30c is connected to the driving source 30a. A +Z side end of the spline shaft 30c is inserted into the spline bearing 30d.

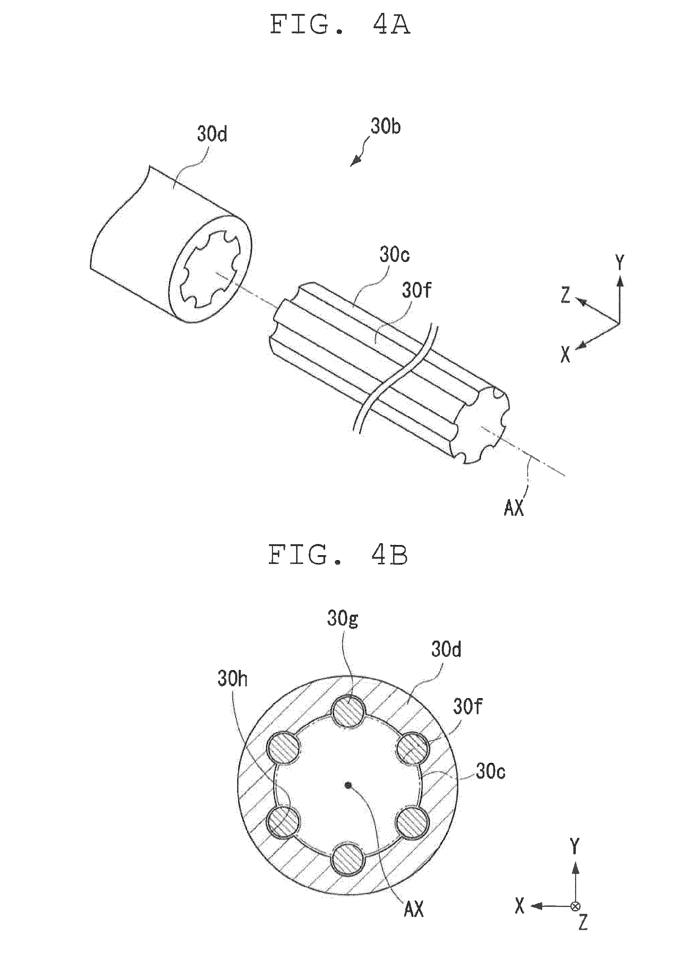

FIG. 4A is a perspective view illustrating an example of the spline shaft 30c and the spline bearing 30d. As illustrated in FIG. 4A, the spline shaft 30c rotates about a rotational axis AX parallel to the Z direction. Grooves 30f extending along an axial direction of the rotational axis AX are formed on the outer periphery of the spline shaft 30c. A plurality of grooves 30f are formed in the peripheral direction of the spline shaft 30c at a predetermined pitch. Although FIG. 4A illustrates the case where six grooves 30f are provided, the number of the grooves is not limited thereto, and may be five or less, or seven or more.

As illustrated in FIG. 1 to FIG. 3, the spline bearing 30d is formed in a linear tube shape, for example, and is fixed to the slider 26. The spline bearing 30d moves in the Z direction integrally with the slider 26. Although the spline bearing 30d is made of a metal material such as iron, the material for the spline bearing 30d is not limited thereto, and may be any other type of material such as resin. In the case where the spline bearing 30d is made of resin, the resin spline bearing 30d can be made lighter than the metal spline bearing 30d, whereby the weight of the slider 26 can be reduced.

FIG. 4B is a schematic sectional view of the spline bearing 30d taken along a plane perpendicular to the rotational axis AX. In FIG. 4B, the position of the spline shaft 30c inserted into the spline bearing 30d is indicated by an alternate long and short dash line. As illustrated in FIG. 4B, a plurality of ball holding sections 30h are formed on the inner peripheral surface of the spline bearing 30d. The ball holding sections 30h rotatably hold respective balls 30g, and restrict the balls 30g from rotating about the rotational axis AX. The ball holding sections 30h may allow the balls 30g to move along the axial direction of the rotational axis AX. The balls 30g are fitted into the respective grooves 30f on the outer periphery of the spline shaft 30c.

When the spline bearing 30d moves in the Z direction integrally with the slider 26, the balls 30g roll in the grooves 30f of the spline shaft 30c. Thus, under the low frictional resistance, the spline bearing 30d moves in the Z direction relative to the spline shaft 30c. When the spline shaft 30c rotates about the rotational axis AX, the spline shaft 30c engages with the balls 30g, and the rotational force of the spline shaft 30c is transmitted to the spline bearing 30d via the balls 30g.

As described above, the spline shaft 30c and the spline bearing 30d can move relative to each other along the axial direction of the rotational axis AX, and expand and contract with the relative movement. When the spline shaft 30c rotates about the rotational axis AX, rotation of the spline shaft 30c can be transmitted to the spline bearing 30d via the grooves 30f and the balls 30g.

Note that the spline shaft 30c and the spline bearing 30d do not necessarily constitute such a ball spline, and protrusions that engage with the grooves 30f of the spline shaft 30c may be formed on the inner periphery of the spline bearing 30d. Alternatively, the protrusions may be formed on the spline shaft 30c, and the grooves may be formed on the spline bearing 30d.

The pinion 30e is fixed to a +Z side end of the spline bearing 30d, and has a plurality of teeth arranged in the peripheral direction. The teeth of the pinion 30e are arranged so as to engage with the respective teeth of the rack 29b. When the spline bearing 30d rotates about the rotational axis AX, the pinion 30e rotates integrally with the spline bearing 30d. Because the pinion 30e is fixed to the slider 26, rotating the pinion 30e causes the rack 29b to move in the Y direction relative to the pinion 30e.

Protective guide members 31 to 33 accommodate various cables including power feeding cables for the chucks 12, 13. As illustrated in FIG. 2, one end of the protective guide member 31 is fixed to a fixing section 35 provided at a predetermined position. The other end of the protective guide member 31 is fixed to an attaching section 23g provided at the -Z side end of the first structure 23a. One end of the protective guide member 32 is fixed to an attaching section 23j of the second structure 23b. The other end of the protective guide member 32 is fixed to an attaching section 26c of the slider 26. One end of the protective guide member 33 is fixed to an attaching section 23h provided at the -Z side end of the second structure 23b. The other end of the protective guide member 33 is fixed to an attaching section 29c provided at the +Y side end of the elevating section 29.

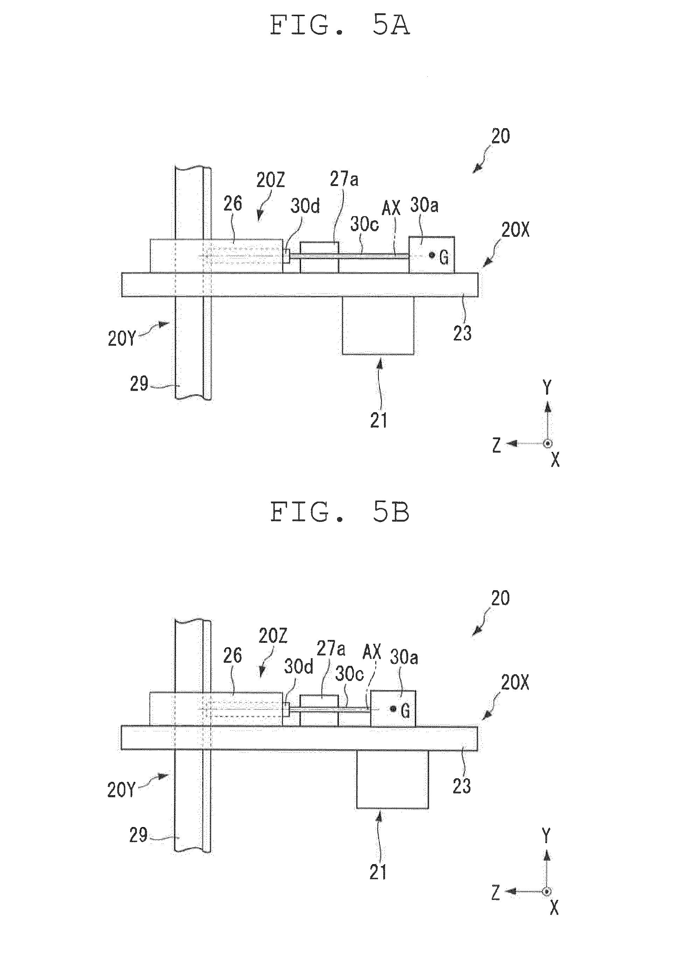

FIG. 5A is a side view schematically illustrating an example of the moving mechanism 20. As illustrated in FIG. 5A, the driving source 30a is disposed closer to the -Z side than the first guide 21. The driving source 27a of the slider 26 is disposed closer to the +Z side than the first guide 21. In this case, a center of gravity G of the driving source 30a is located closer to the -Z side than the first guide 21, and the weight of the driving source 30a acts on the movable body 23 on the -Z side of the first guide 21. Weights of the slider 26, the elevating section 29, and the driving source 27a act on the movable body 23 on the +Z side of the first guide 21. Because the weights act on the places of the movable body 23 across the first guide 21 in the Z direction, the weight of the movable body 23 is brought into balance.

FIG. 5B is a side view schematically illustrating an example of a modification of the configuration in FIG. 5A, in which the position of the driving source 30a is changed. In the example illustrated in FIG. 5B, the driving source 30a is disposed above the first guide 21 (+Y side). The center of gravity G of the driving source 30a is located above the first guide 21. In this case, as compared to the configuration in FIG. 5A, the moment of the movable body 23 (clockwise in FIG. 5B) becomes smaller. This enables the movable body 23 to stably move.

When the workpiece holding section 10 is moved in the X direction in the workpiece conveying device 100 thus configured, the X moving mechanism 20X moves the movable body 23 in the X direction. At this time, the slider 26 and the elevating section 29 move in the X direction integrally with the movable body 23. In this case, relative movement between the movable body 23, the slider 26, and the elevating section 29 does not occur.

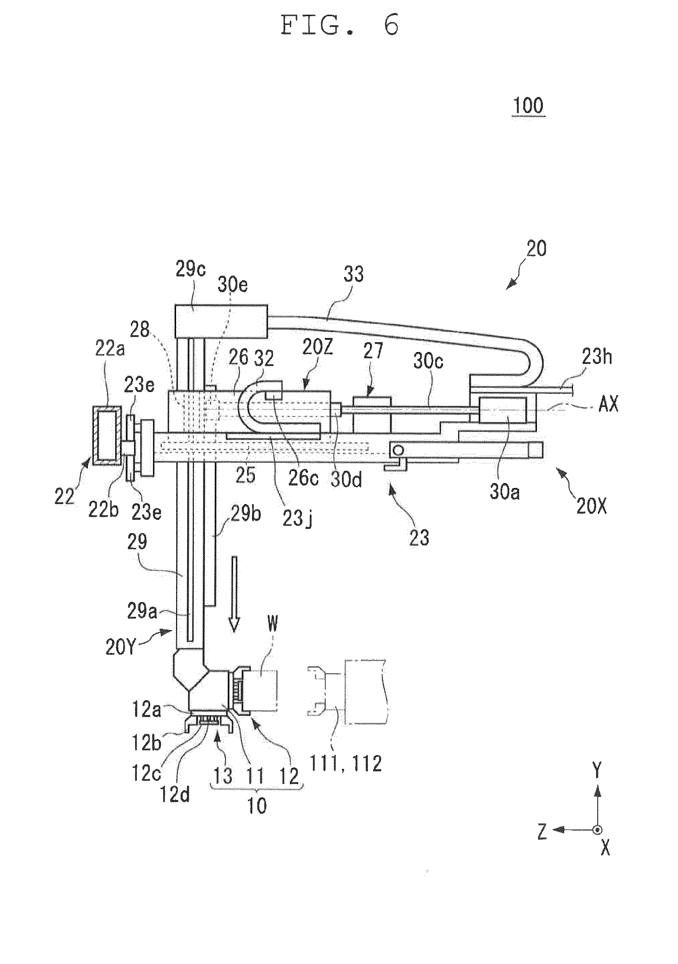

As illustrated in FIG. 6, for example, when the height of the chuck 12 (position in the Y direction) is aligned with the height of the spindle 111, the workpiece holding section 10 is moved in the Y direction. In this case, the Y moving mechanism 20Y moves the elevating section 29 in the Y direction. Specifically, first, the Y moving mechanism 20Y causes the driving source 30a to rotate. The rotation of the driving source 30a is transmitted to the spline shaft 30c, and the spline shaft 30c rotates about the rotational axis AX. With the rotation of the spline shaft 30c, the spline bearing 30d and the pinion 30e rotate about the rotational axis AX, and the rack 29b moves in the Y direction relative to the pinion 30e. Thereby, the elevating section 29 moves in the Y direction along the guide sections 28. Even when the driving source 30a is disposed away from the elevating section 29 in the Z direction in this manner, rotation of the driving source 30a is transmitted to the elevating section 29 via the transmitting section 30b (the spline shaft 30c, the spline bearing 30d, and the pinion 30e). At this time, the movable body 23 and the slider 26 do not move. Accordingly, the elevating section 29 moves in the Y direction relative to both of the movable body 23 and the slider 26.

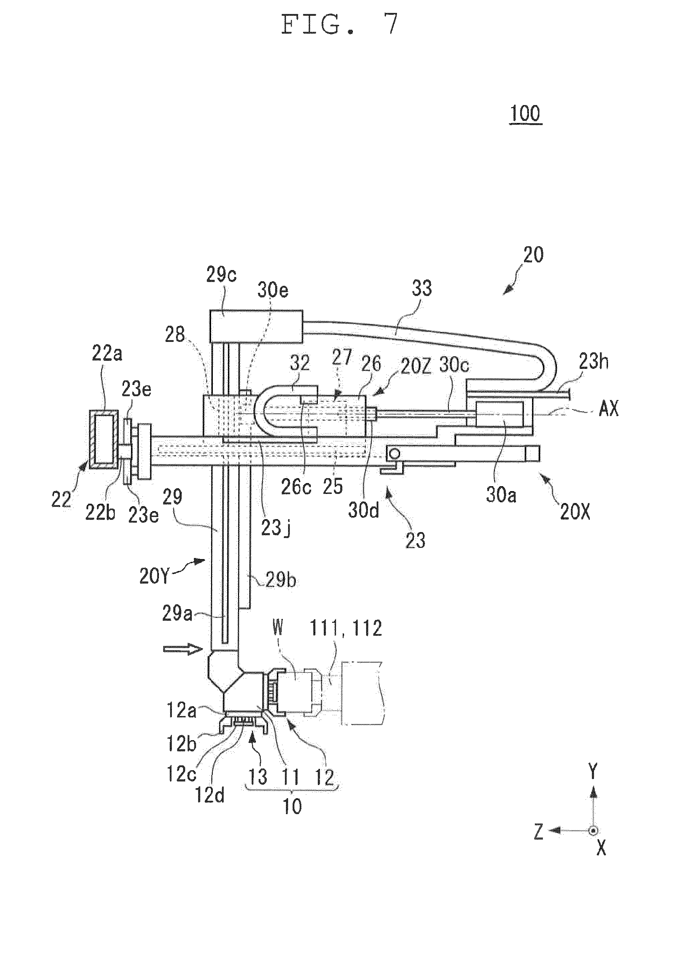

As illustrated in FIG. 7, for example, when the chuck 12 is brought close to (or moved away from) the spindle 111, the workpiece holding section 10 is moved in the Z direction. In this case, the Z moving mechanism 20Z moves the slider 26 in the Z direction. At this time, the elevating section 29 moves in the Z direction integrally with the slider 26, but the movable body 23 does not move. Accordingly, with the movement of the slider 26, the elevating section 29 moves in the Z direction relative to the movable body 23. In this embodiment, because the driving source 30a of the elevating section 29 is provided on the first structure 23a rather than the slider 26, the slider 26 can be rapidly accelerated and decelerated during movement.

As described above, in this embodiment, because the driving source 30a of the elevating section 29 is disposed on the movable body 23 away from the elevating section 29 and the slider 26, the weight of the slider 26 is reduced as compared to configuration in which the driving source 30a is provided on the slider 26. Thus, the slider 26 can be rapidly accelerated and decelerated during movement in the second direction D2 (Z direction), and the travelling time of the slider 26 in the second direction D2 can be reduced. Consequently, time required to convey the workpiece W can be reduced.

### <Second embodiment>

Next, a second embodiment will be described. In the second embodiment, a machine tool including the workpiece conveying device 100 in the first embodiment will be described by way of example. The second embodiment uses the same XYZ orthogonal coordinate system as in the first embodiment. However, in the second embodiment, the rotational axis direction of the spindles 111, 112 is defined as the Z direction, and the direction of defining the cut amount of the workpiece W is defined as the X direction.

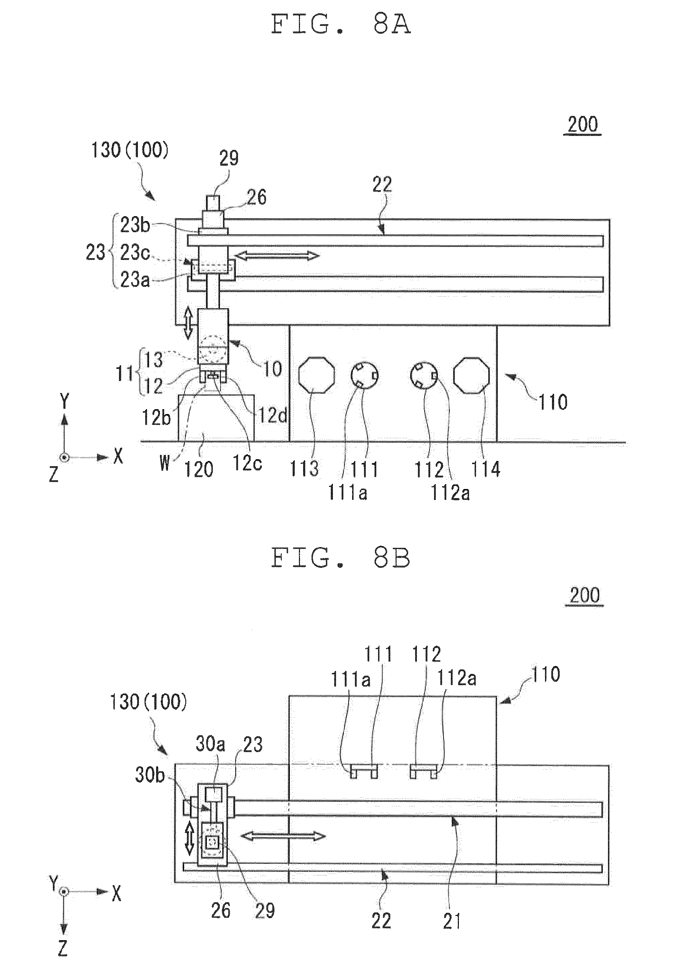

FIGS. 8A and 8B illustrate an example of a machine tool 200 according to the second embodiment. The machine tool 200 illustrated in FIGS. 8A and 8B is a parallel biaxial lathe, for example. In FIGS. 8A and 8B, the +Z side of the machine tool 200 is a front face, and the -Z side is a back face. The ±X sides of the machine tool 200 are side faces, and the X direction is a lateral direction of the machine tool 200.

The machine tool 200 includes a body section 110 and a workpiece loading section 120.

The body section 110 includes spindles 111, 112 and turrets 113, 114. The spindles 111, 112 are arranged in the X direction. The spindles 111, 112 are rotatably supported by respective bearings (not illustrated) and the like. The spindles 111, 112 are provided with chuck jaws 111a, 112a, respectively, on their +Z side ends. The plurality of chuck jaws 111a, 112a are arranged at predetermined intervals around the rotational axes of the spindles 111, 112, respectively. The chuck jaws 111a, 112a can be moved in the radial direction of the spindles 111, 112 to hold the workpiece W.

The turret 113 is disposed on the +X side of the spindle 111. The turret 114 is disposed on the -X side of the spindle 112. Each of the turrets 113, 114 is provided with a rotational driving device such as a motor. The rotational driving devices enable the turrets 113, 114 to rotate about the axis parallel to the Z direction. A plurality of holding sections (not illustrated) for holding a cutting tool are formed on the periphery of each of the turrets 113, 114. All or part of the holding sections hold the cutting tool. Thus, a desired cutting tool is selected by rotating the turrets 113, 114. The cutting tools held by the holding sections of the turrets 113, 114 can be exchanged for each holding table. Examples of the cutting tools include a bit that cuts the workpiece W and rotational tools such as a drill and an end mill. The turrets 113, 114 can move in the X direction and the Z direction by means of a driving device (not illustrated). Thereby, the cutting tool can move in the X direction and the Z direction with respect to the workpiece W.

The workpiece W to be processed using the machine tool 200 is placed on the workpiece loading section 120. The workpiece loading section 120 is, for example, a fixing table, but is not limited thereto, and may be a conveyor or a rotary table.

Like the machine tool 200 illustrated in FIGS. 8A and 8B, some machine tools include a workpiece conveying device 130. In this case, the workpiece conveying device 100 in the first embodiment is used as the workpiece conveying device 130. In the workpiece conveying device 130, as illustrated in FIG. 8B, the driving source 30a of the elevating section 29 is disposed on the movable body 23 and away from the elevating section 29 and the slider 26. Moreover, the workpiece conveying device 130 is provided with the transmitting section 30b that transmits the driving force of the driving source 30a to the elevating section 29.

Next, the operation of the machine tool 200 thus configured will be described.

First, the workpiece conveying device 130 disposes the workpiece holding section 10 above (+Y side) the workpiece loading section 120. Thereafter, as illustrated in FIG. 6A, the elevating section 29 is moved in the -Y direction with the chuck 12 of the loader head 11 facing the lower side (-Y direction), and the workpiece W is gripped by the chuck jaw 12b.

Thereafter, the chuck 12 and the chuck 13 are exchanged by a rotating mechanism (not illustrated). As a result, the chuck 12 and the workpiece W are oriented to the -Z side, and the chuck 13 is oriented to the -Y side. After the chuck 12 is oriented to the -Z side, the elevating section 29 is moved in the +Y direction to pull up the workpiece W.

Next, the X moving mechanism 20X moves the movable body 23 in the +X direction, so that the loader head 11 and the workpiece W are disposed above (+Y side) the spindle 111. The case where the workpiece W is disposed at the spindle 111 will be described below by way of example. In the case where the workpiece W is disposed at the spindle 112, the loader head 11 and the workpiece W are disposed above the spindle 112.

Next, the Y moving mechanism 20Y moves the elevating section 29 in the -Y direction to cause the workpiece W to face the spindle 111. To move the elevating section 29, the driving force of the driving source 30a is transmitted to the elevating section 29 via the transmitting section 30b. Next, the Z moving mechanism 20Z moves the slider 26 in the -Z direction to cause the chuck jaw 111a of the spindle 111 to hold the workpiece W. In this case, because the driving source 30a of the elevating section 29 is disposed on the movable body 23, the slider 26 can be rapidly accelerated and decelerated during movement. Thus, the travelling time of the slider 26 can be reduced, and the time required to convey the workpiece W can be reduced. Thereafter, the loader head 11 is moved in the +Z direction and the +Y direction. Then, the workpiece W is processed according to a predetermined processing recipe by using a tool (not illustrated) provided in the turret 114.

As described above, in the second embodiment, by using the workpiece conveying device 130 that can rapidly accelerate and decelerate the slider 26 during the movement in the second direction D2 to reduce the time required to convey the workpiece W, cycle time of the machine tool 200 can be reduced.

The embodiments have been described above, but the present invention is not limited to the above description, and various changes can be made within the scope not deviating from the gist of the present invention.

For example, in the above embodiments, the workpiece conveying device 100 conveys the workpiece W between the workpiece loading section 120 for loading the workpiece W and the spindles 111, 112, but the present invention is not limited thereto. For example, in the case where a workpiece unloading section for unloading the workpiece W is separately provided, the workpiece conveying device 100 may convey the workpiece W between the spindles 111, 112 and the workpiece unloading section.

In the above embodiments, the two guides of the first guide 21 and the second guide 22 guide the movable body 23. However, the present invention is not limited thereto. For example, the present invention can be applied to the configuration in which the movable body 23 moves along one linear guide.

In the above embodiments, the first structure 23a and the second structure 23b of the movable body 23 swing via the joint 23c. However, the present invention is not limited thereto. The first structure 23a and the second structure 23b may be configured as one rigid body.

In the above embodiments, the configuration has been described by way of example in which, as the transmitting section 30b, the spline shaft 30c is disposed near the driving source 30a, and the spline bearing 30d is disposed near the elevating section 29. However, the present invention is not limited thereto. For example, the spline shaft 30c may be disposed near the elevating section 29, and the spline bearing 30d may be disposed near the driving source 30a. In this case, the spline shaft 30c is fixed to the slider 26, and moves integrally with the slider 26.

## Claims

1. A workpiece conveying device (100) comprising:
a first movable body (29) including a chuck (12, 13) configured to hold a workpiece (W);
a second movable body (26) that supports the first movable body (29) such that the first movable body (29) is movable in a first direction (D1), the second movable body (26) being movable in a second direction (D2) different from the first direction (D1) ; and
a first driving section (30) configured to drive the first movable body (29),
wherein the first driving section (30) includes a driving source (30a) disposed away from the first movable body (29) and away from the second movable body (26), and a transmitting section (30b) configured to transmit a driving force of the driving source (30a) to the first movable body (29).

2. The workpiece conveying device (100) according to claim 1, wherein
the transmitting section (30b) is configured to expand and contract in the second direction (D2), and is formed to transmit rotation.

3. The workpiece conveying device (100) according to claim 2, wherein
the transmitting section (30b) includes a bar-like spline shaft (30c) that extends in the second direction (D2) and a tube-like spline bearing (30d) that receives the spline shaft (30c), and
the spline shaft (30c) and the spline bearing (30d) are movable relative to each other in the second direction (D2).

4. The workpiece conveying device (100) according to claim 3, wherein
the spline shaft (30c) is connected to the driving source (30a) to rotate about an axis (AX) along the second direction (D2), and
the spline bearing (30d) is configured to be rotated by rotation of the spline shaft (30c) to apply a driving force to the first movable body (29).

5. The workpiece conveying device (100) according to any one of claims 1 to 4, further comprising:
a third movable body (23) that supports the second movable body (26) such that the second movable body (26) is movable in the second direction (D2), the third movable body (23) being movable in a third direction (D3) different from the first direction (D1) and the second direction (D2),
wherein the driving source (30a) is disposed on the third movable body (23).

6. The workpiece conveying device (100) according to claim 5, wherein
the third movable body (23) is guided by a guide (21) to move in the third direction (D3), and
the driving source (30a) is disposed, on the third movable body (23), at a position above the guide (21), or a position shifted opposite to the second movable body (26) from the position above the guide (21) along the second direction (D2).

7. The workpiece conveying device (100) according to claim 6, wherein
the third movable body (23) includes a second driving section (27) configured to drive the second movable body (26), and
the second driving section (27) is disposed in the third movable body (23) on a side where the second movable body (26) is installed with respect to the guide (21).

8. A machine tool comprising:
a workpiece conveying device (100) configured to convey a workpiece (W) to a spindle (111, 112), the workpiece conveying device (100) being the workpiece conveying device (100) according to any one of claims 1 to 7.
